Europäisches Patentamt

European Patent Office

Office européen des brevets

(11) Publication number: **0 366 624**
**A2**

## EUROPEAN PATENT APPLICATION

(21) Application number: **89830462.1**

(22) Date of filing: **24.10.89**

(51) Int. Cl.5: **A61C 17/00**

(30) Priority: **26.10.88 IT 363988**

(43) Date of publication of application:
**02.05.90 Bulletin 90/18**

(84) Designated Contracting States:
**CH DE ES FR GB GR LI SE**

(71) Applicant: **CASTELLINI S.p.A.**
**Via Saliceto, 22**
**I-40013 Castelmaggiore (Bologna)(IT)**

(72) Inventor: **Castellini, Franco**
**Via Bellinzona, 60**
**I-40135 Bologna(IT)**

(74) Representative: **Lanzoni, Luciano et al**
**c/o BUGNION S.p.A. Via Farini, 37**
**I-40124 Bologna(IT)**

(54) **A scaler with built-in illumination.**

(57) The scaler comprises an elongated and axially hollow handpiece (1), a rotatable holder (2) accommodated internally of the handpiece (1) and housing drive means (4) for a detachable scaling implement (6), and a light source (7) associated rigidly with the handpiece (1), and incorporates a locking mechanism in the form of a pin (8) and a number of corresponding sockets (9) distributed circumferentially around the longitudinal axis (3) of the holder (2); the holder is spring-loaded and slidable axially between a stable position in which the locking mechanism is engaged, and a non-stable position in which the pin and sockets (8, 9) are disengaged and the holder (2) and the handpiece (1) free to rotate one in relation to the other between two limit positions established by circumferential slots.

FIG 1

FIG 1

## A scaler with built-in illumination

The present invention relates to a scale remover with built-in illumination.

US-PS 4 634 376 discloses a scaling instrument for dental surgery use provided with its own internal light source.

The scaler in question consists essentially in an elongated, axially hollow handpiece, a rotatable core accommodated by the handpiece and encompassing drive means (a vibrator) by which to set in motion a sharpened, angled implement projecting from the forward end, means of illumination permanently associated with the interior of the handpiece and directed toward the implement, and a duct passing through the handpiece and emerging alongside the implement, through which a suitable cooling fluid is channelled.

Means incorporated between the handpiece and the rotatable core permit of establishing the angular position of the one in relation to the other once the light source is trained on the implement; such means take the form of a pair of spring loaded ball or domed catches lodged in and projecting radially from the rotatable core, and engaging respective sockets afforded by the handpiece.

In another embodiment, the means in question take the form of two frontally engaging rings fashioned in material with a high coefficient of friction, coaxially disposed and associated permanently with the rotatable core and the handpiece, respectively; a spring located between the two components serves to keep the rings in close contact during operation of the instrument.

The possibility exists of rigidly associating a pin and a catch with the rotatable core and handpiece, respectively, the purpose of which being to limit the angle of rotation of the one in relation to the other and thus prevent any likelihood of the core or the handpiece being rotated in a given direction for more then one full revolution, the consequence of which would be to distort and break the internal power source and cooling fluid connections. In any event, the angle of rotation allowed by limiters of the type in question will be less than 360°, which signifies that, following a change of implement, the alignment between the tip of the replacement implement and the light source may not always be faultless; this is attributable to the fact that the implement is screwed to the vibrating core of the handpiece, and that the thread positions of any two implements are unlikely to be identical.

With both the embodiments outlined, difficulties are encountered in maintaining a stable angular position of the rotatable core and the handpiece during operation of the instrument. This is due to the fact that scalers currently manufactured and utilized in dentistry are ultrasonic, incorporating drive means by which implements are made to vibrate at a given frequency. Such vibration is inevitably transmitted to the handpiece and has the effect of destabilizing the fit between handpiece and core, with the result that the pencil of light from the built-in source may not always be correctly aligned with the tip of the implement as required.

In neither instance is it feasible to compensate by installing a harder spring, since a proportionately greater effort will then be required to produce relative rotation of the core and the handpiece. Accordingly, the object of the present invention is to embody a scaler with built-in illumination in which the relative angular positioning between the implement and handpiece can be stably maintained, even in the face of the continuous vibration to which the implement is subject.

An additional object of the invention is to embody a scaler in which the angular limit on relative rotation between the implement and handpiece is not less than 360°.

The stated object is fully realized by adoption of a scaler embodiment as characterized in the claims appended. The instrument in question is of the type consisting essentially in an elongated and axially hollow handpiece, a holder accommodated internally of the handpiece and supporting an implement that projects from the forward end, and illumination means associated with the inside of the handpiece; according to the present invention, the holder and the handpiece afford locking means that consist in a projection and a plurality of respective sockets circumferentially encircling the longitudinal axis of the holder, the holder being axially slidable in relation to the handpiece between a stable and a non-stable position in which the locking means are engaged and disengaged, respectively. Rotation of the handpiece and holder one in relation to the other is limited by means of two projections, an annular element positioned between the handpiece and the holder and freely rotatable about the longitudinal axis, and two arcuate slots, slidably accommodating the two projections, which together describe an angle of rotation greater than one full revolution.

Among the advantages of the present invention are its simplicity of construction and operation, and by extension, its high dependability; what is more, the insertable axial length of the locking means is such as to ensure their mutual engagement even in the presence of continuous vibration.

The invention will now be described in detail, by way of example, with the aid of the accompanying drawings, in which:

-fig 1 shows the scaler according to the invention in side elevation, with certain parts cut away better to reveal others;

-fig 2 is the section through II-II of fig 1.

With reference to the accompanying drawings, a scale removing instrument according to the present invention is of the type comprising:

-a handpiece 1 of axially hollow and elongated embodiment consisting in two or more mutually connectable parts;

-a holder 2 accommodated internally of an elongated and offset seating 18 afforded by the handpiece 1, and capable of rotation about its own longitudinal axis 3;

-a scale removing implement 6, attachable to and detachable from drive means 4 accommodated by the holder 2;

-illumination means 7 located internally of and rigidly associated with the handpiece 1.

The drive means 4, positioned with their forward end projecting from the holder 2 and supporting the implement 6, are connected substantially at the rear end of the instrument to power supply means 5 which enter the handpiece 1 by way of an opening. Conventionally, the drive means 4 take the form of a vibrator dseigned to oscillate the implement 6 at a given frequency, and the power supply means 5 consist in electrical conductors, serving both the drive means 4 and the illumination means 7, which are routed through a protective sheath 17 together with a tube from which cooling fluid is directed to the treatment area by way of ducts passing through the holder and emerging from the implement 6 at the point denoted 6c.

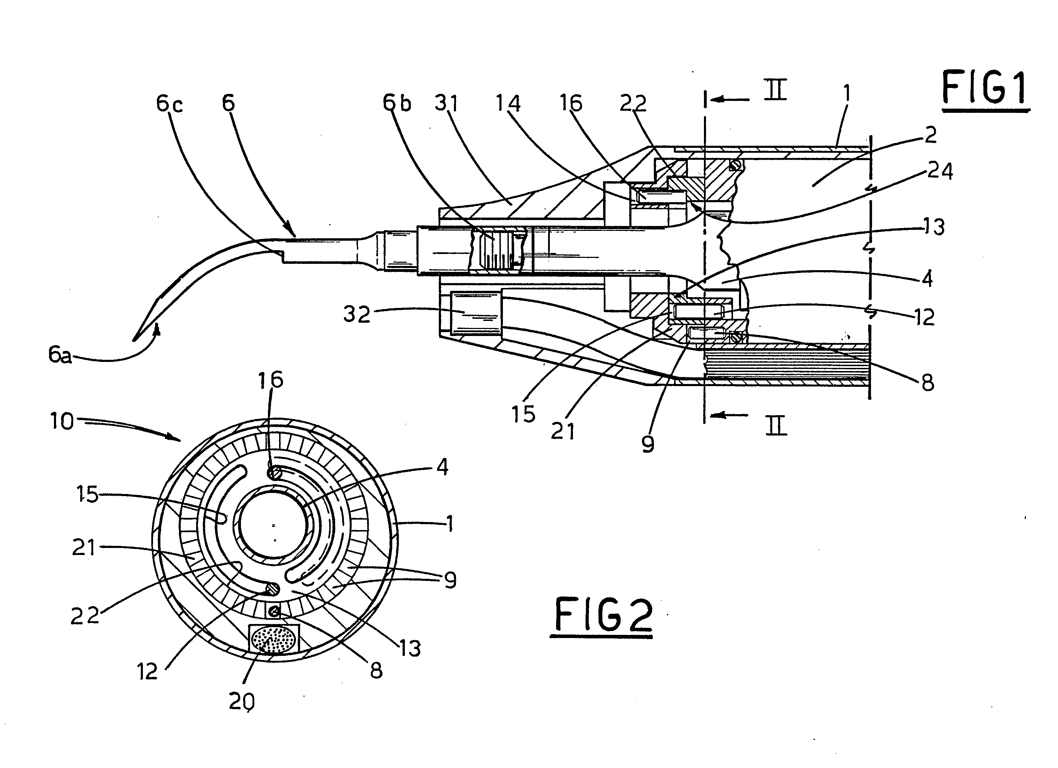

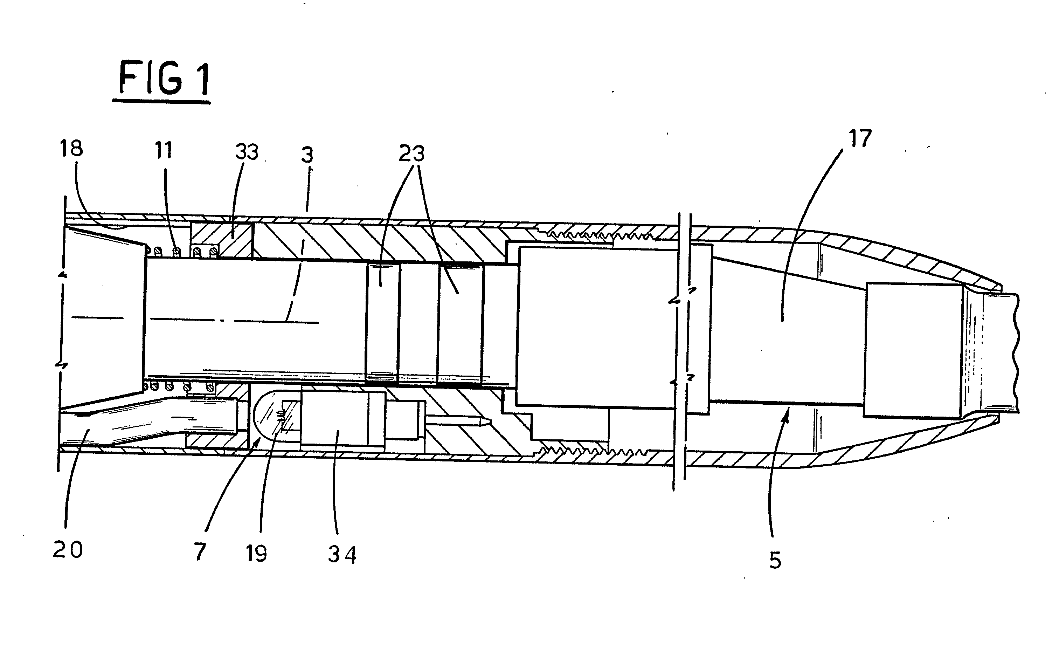

The implement 6 is attached to the drive means 4 by means of a screw fitting 6b, as shown in fig 1.

Illumination means 7 consist in an electric lamp 19 rigidly associated with the handpiece 1 at a point to the rear of the holder 2, and connected to the power supply means 5 in conventional manner by way of a pair of sliding contacts (illustrated in fig 1 as annular elements 23 rigidly associated with the holder 2, which make contact with the two terminals of the lampholder 34), and light-shedding means 20 consisting in a bundle of optic fibres rigidly associated with the handpiece 1, extending between the handpiece 1 and the holder 2 from the lamp 19 to the forward end of the handpiece 1 and directed at the tip 6a of the implement 6. Given that the holder 2 and the handpiece 1 are able to rotate one in relation to the other, and that the implement 6 and the holder 2 are rigidly associated, the optic fibres 20 are disposed parallel to the holder, and offset from its axis 3 at a distance substantially equivalent to the offset of the tip 6a.

Exact alignment of the fibres 20 and the tip 6a is accomplished by rotation of the holder 2 and the handpiece 1 one in relation to the other.

The relative angular position of the handpiece 1 and the holder 2 is selected by way of locking means 8 and 9 located between the two components, whilst the overall angle of rotation allowed to the components one in relation to the other is set by limiting means 24.

According to the invention, the locking means 8 and 9 are of frontally-engaging embodiment, disposed parallel with and distributed circumferentially around the axis 3 of the holder 2. In figs 1 and 2, such means consist in a single projection 8 issuing eccentrically from the forward end of the holder 2 and disposed parallel to the holder axis 3, and a plurality of sockets 9 offered by the handpiece 1. More exactly the projection 8 is embodied as a pawl integral with the holder 2, and the sockets 9 are incorporated into an annular element 21 rigidly associated (e.g. bonded with adhesive, or pressed) with the forward section 31 of the handpiece 1, from which the scaling implement 6 projects; this same forward section 31 also affords a lens or cap, for the illumination means 7.

The offset seating 18 is marginally longer than the corresponding stretch of the holder 2 effectively accommodated, such that the holder 2 is allowed a degree of axial sliding movement in relation to the handpiece 1. To the rear, between the holder 2 and the handpiece 1 (or rather, a ring 33 projecting inwards and serving also to clamp the rear end of the bundle of optic fibres 20), tension means are inserted for the purpose of keeping the pawl 8 stably inserted in the selected socket 9; such means take the form of a spring 11.

The degree of relative axial slide between holder 2 and handpiece 1 is made marginally greater than the insertable length of the pawl 8, in such a way that the pawl 8 can be extracted completely from a given socket 9 and rotated freely about the holder axis 3 so as to obtain alignment ultimately with another socket 9.

Limiting means 24 consist in a pin 12 issuing from the holder 2 and disposed parallel to the pawl 8, an intermediate ring 13, and a slot 14 in the shape of an arc to a circle, formed in the handpiece 1. In the example of fig 1, the slot 14 is formed in the annular element 21, which also incorporates the sockets 9 and offers an internal seat 22 freely and rotatably accommodating the intermediate ring 13 (see also fig 2).

The intermediate ring 13 exhibits a slot 15 on the one hand, shaped as an arc to a circle, and on the other, a further pin 16 set parallel to the axis 3 of the holder; the slot 15 slidably accommodates the pin 12 projecting from the holder 2, whilst the pin 16 locates in the arched slot 14 offered by the annular element 21. Likewise in fig 1, the pins 12 and 16 are shown as integral or rigidly associated with the holder 2 and with the inermediate ring 13, respectively.

The sum of the angular travel afforded by the two slots 14 and 15 is greater than 360°; accordingly, the angle of relative rotation permitted to the handpiece 1 and the holder 2 will be substantially equivalent to the combined angle of the two slots. More exactly, imagining the holder 2 and the handpiece 1 to be rotated as far as permissible in one direction, i.e. to the limit established by arrival of the pins 14 and 16 at one ends of their respective slots 15 and 14, an initial rotation effected in the reverse direction will bring one pin to the other end of its slot, whereupon further rotation in this same direction will bring the remaining pin likewise to the opposite end of the second slot.

The insertable length of the pins 12 and 16 will be greater than that of the pawl 8, hence greater than the degree of relative sliding movement between the holder 2 and the handpiece 1, in order to prevent any possibility of their becoming separated from the respective slots 15 and 15 when the locking means 8 and 9 are disengaged.

During normal operation, the pawl 8 will be engaged in one of the sockets 9 and held thus in position by the spring 11, thereby inhibiting any relative rotation of the holder 2 and the handpiece 1, which for practical purposes are rendered integral.

Replacement of a given implement 6 is effected by taking hold of the handpiece 1 and unscrewing the implement 6 from the drive means 4 which, with the pawl 8 engaged, remain locked rotationally to the handpiece 1. If, with the new implement 6 screwed in place, the alignment between the previous tip 6a and the pencil of light 32 should be lost (a common enough occurrence in practice), this is remedied by gripping the implement 6 with one hand, and the handpiece 1 with the other, and urging the holder 2 against the spring 11 to the point where the pawl 1 is freed from the relative socket 9, whereupon the implement 6 and the handpiece 1 can be rotated one in relation to the other in such a way as to align the tip 6a with the forward end of the fibres 20; this accomplished, pressure can be relaxed in order to extend the holder 2 and handpiece 1 and thus bring about location of the pawl 8 in the newly aligned socket 9.

In a scaler thus embodied, use can be made of a relatively soft spring 11 in order to facilitate rotation of the implement 6 and the handpiece 1 one in relation to the other; the insertable length of the pawl 8 will be such, in any event, as to ensure its stable and continued engagement in a respective socket 9.

The option also exists of using projections 8, 12 and 16 which extend radially from the longitudinal axis 3, whilst operating in the axial direction as already described; such radial projections will need nonetheless to exhibit a certain length along the longitudinal axis 3 to ensure stable insertion during operation of the instrument 10.

Similarly, the various projections 8, 12 and 16, and the sockets 9 and slots 15, might be embodied differently, without prejudice to the invention; for example, the intermediate ring 13 might carry both pins 12 and 16 or both slots 15 and 14, and to advantage, could be provided with two slots 15 for a more balanced distribution of the forces applied.

## Claims

1) A scaler with built-in illumination, comprising:
-a handpiece (1) of elongated and axially hollow embodiment;
-a holder (2), accommodated internally of the handpiece (1) and capable of rotation about its own longitudinal axis (3) in relation to the handpiece;
-drive means (4) encompassed by the holder (2), extending to the forward end of the handpiece, and in receipt of power from means (5) entering at the rear of the handpiece;
-a pointed and angled scale removing implement (6), attachable to and detachable from the forward end of the drive means (4);
-illumination means (7) directed substantially at the tip (6a) of the implement (6) and associated rigidly with the handpiece (1);
-locking means (8, 9) located between and serving to establish the relative angular positions of the holder (2) and the handpiece (1);
-means (24) located between and serving to limit the relative angular travel of the holder (2) and the handpiece (1),
characterized
in that limiting means (24) are embodied as two projections (12, 16), and respective slots (15, 14) in the shape of arcs to circles centred on the longitudinal axis (3) of the holder and slidably accommodating the projections, and are incorporated into the holder (2), into the handpiece (1), and into an intermediate ring (13) located between the holder and the handpiece and freely rotatable about the longitudinal axis (3) of the holder; and in that the sum of the angles subtendable by the slots (15, 14) is greater than 360°, thus affording the holder (2) and the handpiece (1) a freedom of relative rotation not less than 360°.

2) A scaler as in claim 1, comprising positive locking means (8, 9) distributed about the longitudinal axis (3) of the holder and engaging and disengaging in a direction parallel thereto, wherein the holder (2) and the handpiece (1) are mutually, axially and elastically slidable between a non-stable position, in which the locking means (8, 9) are disengaged one from the other and the holder (2) and the handpiece (1) remain free to rotate one in relation to the other, and a stable position in which the locking means (8, 9) engage one with the other and all parts of the scaler (10) are obliged to rotate as one.

3) A scaler with built-in illumination, comprising:

-a handpiece (1) of elongated and axially hollow embodiment;
-a holder (2), accommodated internally of the handpiece (1) and capable of rotation about its own longitudinal axis (3) in relation to the handpiece;
-drive means (4) encompassed by the holder (2), extending to the forward end of the handpiece, and in receipt of power from means (5) entering at the rear of the handpiece;
-a pointed and angled scale removing implement (6), attachable to and detachable from the forward end of the drive means (4);
-illumination means (7) directed substantially at the tip (6a) of the implement (6) and associated rigidly with the handpiece (1);
-locking means (8, 9) located between and serving to establish the relative angular positions of the holder (2) and the handpiece (1);
-means (24) located between and serving to limit the relative angular travel of the holder (2) and the handpiece (1),
characterized
in that it the locking means (8, 9) are positive acting, distributed about the longitudinal axis (3) of the holder and engageable and disengageable in a direction parallel thereto;
in that the holder (2) and the handpiece (1) are mutually, axially and elastically slidable between a non-stable position, in which the locking means (8, 9) are disengaged one from the other and the holder (2) and the handpiece (1) remain free to rotate one in relation to the other, and a stable position in which the locking means (8, 9) engage one with the other and all parts of the scaler (10) are obliged to rotate as one;
in that limiting means (24) are embodied as two projections (12, 16), and respective slots (15, 14) in the shape of arcs to circles centred on the longitudinal axis (3) of the holder and slidably accommodating the projections, and are incorporated into the holder (2), into the handpiece (1), and into an intermediate ring (13) located between the holder and the handpiece and freely rotatable about the longitudinal axis (3) of the holder; and
in that the sum of the angles subtendable by the slots (15, 14) is greater than 360°, thus affording the holder (2) and the handpiece (1) a freedom of relative rotation not less than 360°.

4) A scaler as in claim 2 or claim 3, wherein locking means consist in a projection (8) issuing from the holder (2), and a plurality of respective sockets (9) afforded by the handpiece (1), which are disposed circumferentially about the longitudinal axis (3) of the holder.

5) A scaler as in claim 2 or claim 3, wherein the projections (12, 16) of the limiting means (24) extend in a direction parallel to the longitudinal axis (3) of the holder.

6) A scaler as in claim 2 or claim 3, wherein the projections (12, 16) of the limiting means (24) extend in radial directions, departing from the longitudinal axis (3) of the holder.

7) A scaler as in claim 5 or claim 6, wherein one projection (12) is incorporated into the holder (2), and the remaining projection (16) into the intermediate ring (13).

8) A scaler as in claim 5 or claim 6, wherein one projection (12) is incorporated into the holder (2) and the remaining projection (16) into the handpiece (1).

9) A scaler as in claim 5 or claim 6, wherein both projections (12, 16) are incorporated into the intermediate ring (13).

10) A scaler as in claim 5, wherein the projections (12, 16) are embodied as pins, each associated rigidly with the respective part of the instrument into which it is incorporated.

11) A scaler as in claim 4, wherein the projection (8) extends parallel to the longitudinal axis (3) of the holder (2).

12) A scaler as in claim 1 or claim 3, wherein the insertable length of the projections (12, 16), measured along the longitudinal axis (3) of the holder (2), is greater than the distance separating the stable and non-stable positions assumed by the holder (2) and the handpiece (1).

13) A scaler with built-in illumination, comprising:

-a handpiece (1) of elongated and axially hollow embodiment;
-a holder (2), accommodated internally of the handpiece (1) and capable of rotation about its own longitudinal axis (3) in relation to the handpiece;
-drive means (4) encompassed by the holder (2), extending to the forward end of the handpiece, and in receipt of power from means (5) entering at the rear of the handpiece;
-a pointed and angled scale removing implement (6), attachable to and detachable from the forward end of the drive means (4);
-illumination means (7) directed substantially at the tip (6a) of the implement (6) and associated rigidly with the handpiece (1);
-locking means (8, 9) located between and serving to establish the relative angular positions of the holder (2) and the handpiece (1);

-means (24) located between and serving to limit the relative angular travel of the holder (2) and the handpiece (1),

characterized

in that it the locking means (8, 9) are positive acting, distributed about the longitudinal axis (3) of the holder and engageable and disengageable in a direction parallel thereto;

in that the holder (2) and the handpiece (1) are mutually, axially and elastically slidable between a non-stable position, in which the locking means (8, 9) are disengaged one from the other and the holder (2) and the handpiece (1) remain free to rotate one in relation to the other, and a stable position in which the locking means (8, 9) engage one with the other and all parts of the scaler (10) are obliged to rotate as one;

in that limiting means (24) comprise: a first projection (12) issuing from the holder (2) and extending parallel to its longitudinal axis (3); an intermediate ring (13), coaxial with and rotatable about the longitudinal axis (3) of the holder and affording, on the one hand, a first slot (15) in the shape of an arc to a circle centred on the longitudinal axis (3) of the holder, slidably accommodating the first projection (12), and on the other, a second projection (16) extending parallel to the longitudinal axis (3); and a second slot (14) in the shape of an arc to a circle centred on the longitudinal axis (3) of the holder, issuing from the handpiece (1) and slidably accommodating the second projection (16);

in that the sum of the angles subtendable by the slots (15, 14) is greater than $360°$, thus affording the holder (2) and the handpiece (1) a freedom of relative rotation not less than $360°$; and in that locking means consist in a projection (8) issuing from the holder (2) and extending parallel to its longitudinal axis (3), and a plurality of respective sockets (9) incorporated into the handpiece (1) and disposed circumferentially about the longitudinal axis (3) of the holder.

14) A scaler as in claim 1 or claim 3, comprising two symmetrically disposed projections (12) issuing from the holder (2) and two relative symmetrically disposed slots (15) afforded by the intermediate ring (13).

FIG1

FIG2

FIG 1

18    11    33    3    23    17

20    7    19    34    5

EP 0 366 624 A2